# EUROPEAN PATENT SPECIFICATION

(11) **EP 4 442 521 B1**
(45) Date of publication and mention of the grant of the patent: **25.02.2026**
(21) Application number: 22817351.4
(22) Date of filing: 09.11.2022
(51) Int. Cl.: B60T 8/32, B60T 8/17, B62L 3/02

(54) **HYDRAULIC CONTROL UNIT AND VEHICLE**
HYDRAULISCHE DRUCKSTEUERUNG UND FAHRZEUG
CONTRÔLE HYDRAULIQUE DE LA PRESSION ET VÉHICULE

(30) Priority: 30.11.2021 JP 2021194656
(43) Date of publication of application: 09.10.2024
(73) Proprietor: Robert Bosch GmbH, 70442 Stuttgart (DE)
(72) Inventor: KOMURA, Taro, Yokohama-shi, Kanagawa 2248501 (JP); IKEDA, Yuki, Yokohama-shi, Kanagawa 2248501 (JP)
(86) International application number: PCT/IB2022/060774
(87) International publication number: WO 2023/099987

(56) References cited:
- JP-A- 2014 015 077
- US-A- 5 785 393
- US-A1- 2014 306 515

## Description

### Technical Field

The present invention relates to a hydraulic pressure control unit for a vehicle and to a vehicle equipped with the hydraulic pressure control unit.

### Background Art

Some existing vehicles are equipped with a hydraulic pressure control unit that controls the pressure of brake fluid of a braking device configured to brake a vehicle (see PTL 1, for example). This hydraulic pressure control unit includes a connector that is connected to an in-vehicle network made up of CAN bus or the like, and is connected to the in-vehicle network via the connector. In addition, the hydraulic pressure control unit is driven by power supplied from a battery mounted to the vehicle.

The hydraulic pressure control unit needs to be constantly supplied with power from the viewpoint of protection of data in a volatile memory, for example. In this event, if the hydraulic pressure control unit is constantly kept in an operation mode in which the pressure of brake fluid of the braking device can be controlled, it may cause a battery to run out. For this reason, when the vehicle is in a state of not being ready for travel or when the vehicle is in a state of not being preparing for travel, such as when an ignition switch is turned off, the hydraulic pressure control unit stands by in a sleep mode in which power consumption is suppressed as compared to that in the operation mode. Then, when the vehicle becomes in a state of being ready for travel or when the vehicle becomes in a state of being preparing for travel, such as when the ignition switch is turned on, the hydraulic pressure control unit operates in the operation mode in which the pressure of brake fluid of the braking device can be controlled.

### Citation List

### Patent Literature

PTL 1: JP-A-2014-015077
PTL 2: US 5 785 393 A describes an electronic controller for energizing electrically operated brakes in a towed vehicle and, in particular, to an electronic brake controller which includes a remote manual control.
PTL 3: US 2014/306515 A1 describes a braking method and brake device for the hydraulic brake system of a vehicle, in particular a utility vehicle.

### Summary of Invention

### Technical Problem

An existing hydraulic pressure control unit has such a configuration as to switch its mode between the operation mode and the sleep mode with a wakeup signal as a trigger. Specifically, the existing hydraulic pressure control unit includes a wakeup terminal that is a terminal dedicated to receiving a wakeup signal. The existing hydraulic pressure control unit has such a configuration as to switch its mode to the operation mode once a wakeup signal is input to the wakeup terminal in a state where this control unit stands by in the sleep mode.

Here, a straddle-type vehicle being one type of a vehicle has low flexibility in the layout of components and low flexibility in the mounting of a hydraulic pressure control unit as compared to vehicles such as a four-wheeled motor vehicle. For this reason, there has heretofore been a demand for reduction in size of a hydraulic pressure control unit to be mounted to straddle-type vehicles. In addition, in recent years, there also has been a demand for reduction in size of a hydraulic pressure control unit for vehicles such as a four-wheeled motor vehicle due to reasons such as reduction in size of an engine room and increase in the number of components mounted in the engine room. In this regard, in the existing hydraulic pressure control unit, the wakeup terminal constitutes one of factors of hampering reduction in size of a hydraulic pressure control unit. For this reason, there is a problem that the existing hydraulic pressure control unit is difficult to reduce in size.

The present invention has been made in view of the above problem. A first objective of the present invention is to achieve, in a hydraulic pressure control unit that controls the pressure of brake fluid of a braking device configured to brake a vehicle, the hydraulic pressure control unit capable of reducing its size as compared to an existing hydraulic pressure control unit. In addition, a second objective of the present invention is to achieve a vehicle equipped with such a hydraulic pressure control unit.

### Solution to Problem

A hydraulic pressure control unit according to the present invention is a hydraulic pressure control unit that controls the pressure of brake fluid of a braking device configured to brake a vehicle, the hydraulic pressure control unit including: a control device that is configured to control the pressure; and a connector that is connected to an in-vehicle network, in which the control device includes a mode switching part that is configured to switch the mode between an operation mode and a sleep mode, the operation mode is a mode in which control on the pressure is executed, the sleep mode is a mode in which power consumption is suppressed as compared to that in the operation mode, the connector includes a terminal that accepts input of a control signal used for the control on the pressure, and the mode switching part has such a configuration as to switch the mode from the sleep mode to the operation mode once a signal is input to the terminal during the sleep mode.

In addition, a vehicle according to the present invention includes the hydraulic pressure control unit according to the present invention.

### Advantageous Effects of Invention

The hydraulic pressure control unit according to the present invention includes the terminal that accepts input of the control signal used for the control on the pressure of brake fluid of the braking device. In addition, The hydraulic pressure control unit according to the present invention switches its mode from the sleep mode to the operation mode once a signal is input to the terminal. In other words, the hydraulic pressure control unit according to the present invention needs no wakeup terminal. Further, the terminal that accepts input of the control signal used for the control on the pressure of brake fluid of the braking device is the configuration also essential for the existing hydraulic pressure control unit and is provided also to a connector of the existing hydraulic pressure control unit. Accordingly, the hydraulic pressure control unit according to the present invention does not need to provide any new terminal instead of the wakeup terminal. Thus, the hydraulic pressure control unit according to the present invention can be made smaller in size than the existing hydraulic pressure control unit because the connector can be made smaller in size than that in the existing hydraulic pressure control unit.

### Brief Description of Drawings

Fig. 1 is a diagram illustrating the configuration of a vehicle on which a brake system according to an embodiment of the present invention is mounted.
Fig. 2 is a diagram illustrating the configuration of the brake system according to the embodiment of the present invention.
Fig. 3 is a diagram illustrating a hydraulic pressure control unit according to the embodiment of the present invention.
Fig. 4 is a control flow diagram used when a mode switching part of a control device according to the embodiment of the present invention switches the mode between a sleep mode and an operation mode.

### Description of Embodiments

Hereinbelow, a hydraulic pressure control unit according to the present invention and a vehicle equipped with the hydraulic pressure control unit will be described using the drawings.

Note that, although the following description describes an example in which the hydraulic pressure control unit according to the present invention is mounted to two-wheeled motor vehicles being one type of straddle-type vehicles, the hydraulic pressure control unit according to the present invention may be mounted to straddle-type vehicles other than two-wheeled motor vehicles. Examples of such straddle-type vehicles other than two-wheeled motor vehicles include vehicles such as bicycles (e.g., two-wheeled cycles and three-wheeled cycles), and three-wheeled motor vehicles and buggies using at least one of an engine and an electric motor as its driving source. Here, the bicycles denote all kinds of vehicles capable of driving forward on a road by effort applied to pedals. In other words, the bicycles include normal bicycles, pedal-assisted electric bicycles, electric bicycles, and the like. In addition, the two-wheeled motor vehicles or three-wheeled motor vehicles denote so-called motorcycles, and the motorcycles include motorbikes, scooters, electric scooters, and the like. Alternatively, the hydraulic pressure control unit according to the present invention may be mounted to vehicles other than straddle-type vehicles such as four-wheeled motor vehicles using at least one of an engine and an electric motor as its driving source.

Meanwhile, although the following description describes an example in which the hydraulic pressure control unit according to the present invention is employed in a brake system for a vehicle equipped with dual hydraulic circuits, the number of hydraulic circuits in the brake system for a vehicle that employs the hydraulic pressure control unit according to the present invention is not limited to two. The brake system for a vehicle that employs the hydraulic pressure control unit according to the present invention may include only a single hydraulic circuit, or alternatively may include triple or larger-line hydraulic circuits.

Meanwhile, the configuration, operation, and the like described below are one example, and the present invention is not limited to the case of having such a configuration, operation, and the like. Moreover, in the drawings, the same reference signs are sometimes given to the same or similar members or portions, or no reference signs are sometimes given to one or some of the same or similar members or portions. Further, their detailed structures are either illustrated in a simple manner or not described as needed.

### Embodiment

Hereinbelow, a brake system for a vehicle equipped with the hydraulic pressure control unit according to this embodiment will be described.

### <Configuration and Operation of Brake System for Vehicle>

The configuration and operation of the brake system equipped with the hydraulic pressure control unit according to this embodiment will be described.

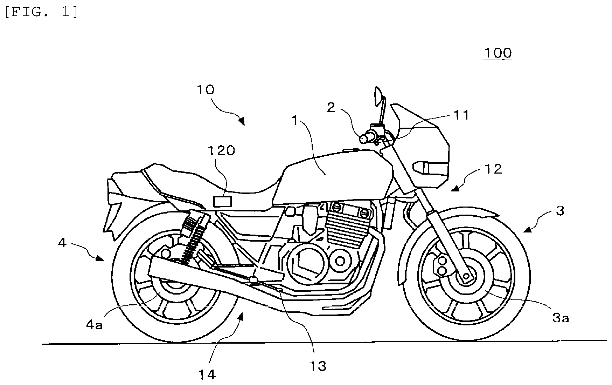

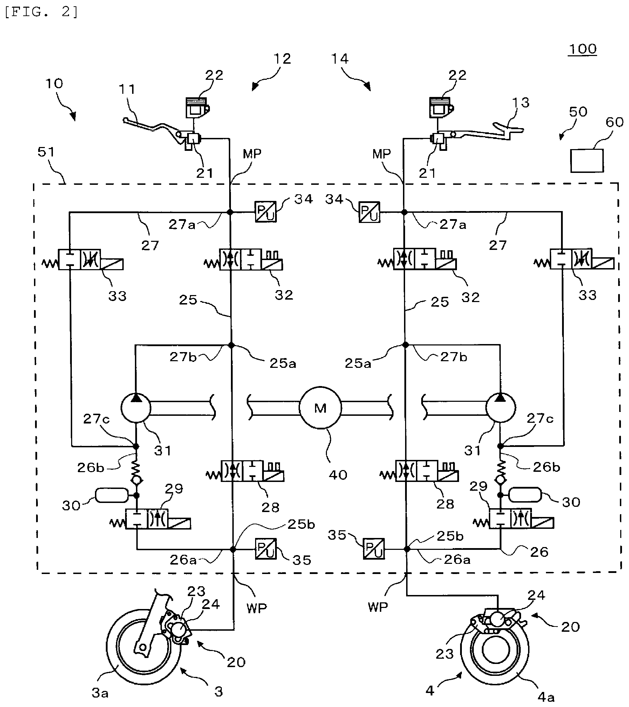

Fig. 1 is a diagram illustrating the configuration of the vehicle on which the brake system according to the embodiment of the present invention is mounted. Fig. 2 is a diagram illustrating the configuration of the brake system according to the embodiment of the present invention.

As illustrated in Fig. 1 and Fig. 2, a brake system 10 is mounted to a vehicle 100 such as a two-wheeled motor vehicle. The vehicle 100 includes: a trunk 1; a handlebar 2 that is turnably held by the trunk 1; a front wheel 3 that is turnably held by the trunk 1 together with the handlebar 2; and a rear wheel 4 that is pivotally held by the trunk 1. Here, a battery 120 is also mounted to the vehicle 100. The battery 120 is configured to supply power to components such as a hydraulic pressure control unit 50 according to this embodiment to be described later.

The brake system 10 includes: a brake lever 11; a first hydraulic circuit 12 that is filled with brake fluid; a brake pedal 13; and a second hydraulic circuit 14 that is filled with brake fluid. The brake lever 11 is provided to the handlebar 2 and manipulated by the hands of a driver. The first hydraulic circuit 12 is configured to apply a brake force, corresponding to the amount of manipulation of the brake lever 11, to a rotor 3a that is configured to rotate together with the front wheel **3.** In other words, the first hydraulic circuit 12 is configured to apply a brake force, corresponding to the amount of manipulation of the brake lever 11, to the front wheel 3. The brake pedal 13 is provided below the trunk 1 and manipulated by the feet of the driver. The second hydraulic circuit 14 is configured to apply a brake force, corresponding to the amount of manipulation of the brake pedal 13, to a rotor 4a that is configured to rotate together with the rear wheel 4. In other words, the second hydraulic circuit 14 is configured to apply a brake force, corresponding to the amount of manipulation of the brake pedal 13, to the rear wheel 4.

Note that, the brake lever 11 and the brake pedal 13 are one example of a brake manipulation part. For example, a brake pedal other than the brake pedal 13 provided to the trunk 1 may be employed as the brake manipulation part instead of the brake lever 11. In addition, for example, a brake lever other than the brake lever 11 provided to the handlebar 2 may be employed as the brake manipulation part instead of the brake pedal 13. Further, the first hydraulic circuit 12 may be configured to apply a brake force, corresponding to the amount of manipulation of the brake lever 11 or the amount of manipulation of the brake pedal other than the brake pedal 13 provided to the trunk 1, to the rotor 4a that is configured to rotate together with the rear wheel 4. Furthermore, the second hydraulic circuit 14 may be configured to apply a brake force, corresponding to the amount of manipulation of the brake pedal 13 or the amount of manipulation of the brake lever other than the brake lever 11 provided to the handlebar 2, to the rotor 3a that is configured to rotate together with the front wheel 3.

The first hydraulic circuit 12 and the second hydraulic circuit 14 of the brake system 10 have the same configuration. Thus, in the following description, the configuration of the first hydraulic circuit 12 is described on their behalf.

The first hydraulic circuit 12 includes: a master cylinder 21 that is embedded with a piston (not illustrated in the drawing); a reservoir 22 that is attached to the master cylinder 21; and a braking device 20 that is held in the trunk 1. The braking device 20 is configured to brake the vehicle 100 and includes: a brake caliper 23 that has a brake pad (not illustrated in the drawing); and a wheel cylinder 24 that is configured to activate the brake pad (not illustrated in the drawing) of the brake caliper 23.

In addition, the first hydraulic circuit 12 includes: a main flow channel 25; a feed flow channel 27; and a sub-flow channel 26. In this embodiment, the main flow channel 25, the feed flow channel 27, and the sub-flow channel 26 are arranged in a substrate 51 of the hydraulic pressure control unit 50.

The main flow channel 25 is a flow channel that causes the master cylinder 21 and the wheel cylinder 24 to communicate with each other. In this embodiment, a master cylinder port MP that is formed at one end of the main flow channel 25 and the master cylinder 21 are connected to each other via a fluid duct. Moreover, a wheel cylinder port WP that is formed at the other end of the main flow channel 25 and the wheel cylinder 24 are connected to each other via a fluid duct. Thus, the main flow channel 25 causes the master cylinder 21 and the wheel cylinder 24 to communicate with each other. Note that the master cylinder 21 and the wheel cylinder 24 may be directly connected to each other.

The feed flow channel 27 is a flow channel that is configured to feed brake fluid to a midstream part 25a of the main flow channel 25. Specifically, brake fluid in the master cylinder 21 is fed to the midstream part 25a of the main flow channel 25 via the feed flow channel 27. The feed flow channel 27 has an end part 27a being one end part that communicates with the master cylinder 21, and an end part 27b being the other end part that is connected to the midstream part 25a of the main flow channel 25. Specifically, in this embodiment, the end part 27a of the feed flow channel 27 is connected to the main flow channel 25 (to put it in more detail, an area closer to the master cylinder 21 with respect to a first switching valve 32 to be described later) . The end part 27a of the feed flow channel 27 communicates with the master cylinder 21 via a fluid duct that connects the master cylinder 21 and the master cylinder port MP to each other and the main flow channel 25. Note that, the end part 27a of the feed flow channel 27 may be connected to the master cylinder port MP or alternatively may be directly connected to the master cylinder 21.

The sub-flow channel 26 is a flow channel that releases brake fluid in the main flow channel 25. Specifically, brake fluid having flowed into the main flow channel 25 from the wheel cylinder 24 is released to the sub-flow channel 26. An end part 26a that is one end part of the sub-flow channel 26 is connected to a midstream part 25b of the main flow channel 25. The midstream part 25b is a midstream part that is located in the main flow channel 25 in an area closer to the wheel cylinder 24 with respect to the midstream part 25a. In addition, an end part 26b that is an end part of the sub-flow channel 26 opposed to the end part 26a is connected to a midstream part 27c of the feed flow channel 27. The midstream part 27c is a midstream part that is located in the feed flow channel 27 in an area between a second switching valve 33 to be described later and a pump 31.

The brake system 10 also includes, in the first hydraulic circuit 12: an inlet valve 28; an outlet valve 29; an accumulator 30; the first switching valve 32; the second switching valve 33; the pump 31; and a motor 40.

The inlet valve 28 is provided to the main flow channel 25 in an area between the midstream part 25a and the midstream part 25b. The flow rate of brake fluid passing through this area is controlled by opening and closing operations of the inlet valve 28. The accumulator 30 is provided to the sub-flow channel 26 and configured to store brake fluid having flowed into the sub-flow channel 26 from the midstream part 25b. The outlet valve 29 is provided to the sub-flow channel 26 in an area closer to the end part 26a with respect to the accumulator 30. The flow rate of brake fluid passing through this area is controlled by opening and closing operations of the outlet valve 29. The first switching valve 32 is provided to the main flow channel 25 in an area closer to the master cylinder 21 with respect to the midstream part 25a. The flow rate of brake fluid passing through this area is controlled by opening and closing operations of the first switching valve 32. The second switching valve 33 is provided to the feed flow channel 27. The flow rate of brake fluid passing through the feed flow channel 27 is controlled by opening and closing operations of the second switching valve 33. The pump 31 is provided to the feed flow channel 27 in an area closer to the end part 27b with respect to the second switching valve 33. The pump 31 communicates with the second switching valve 33 on its inlet side and communicates with the end part 27b on its outlet side. The motor 40 is a driving source for the pump 31. In other words, the pump 31 is driven by the motor 40. Note that, in this embodiment, the hydraulic pressure control unit has such a configuration that the pump 31 of the first hydraulic circuit 12 and the pump 31 of the second hydraulic circuit 14 are driven by the shared motor 40.

In this embodiment, the brake system 10 also includes, in the first hydraulic circuit 12: a master cylinder-side pressure sensor 34 that is configured to detect the pressure of brake fluid inside the master cylinder **21;** and a wheel cylinder-side pressure sensor 35 that is configured to detect the pressure of brake fluid inside the wheel cylinder 24. The master cylinder-side pressure sensor 34 is provided to the main flow channel 25 in an area closer to the master cylinder 21 than the first switching valve 32. The wheel cylinder-side pressure sensor 35 is provided to the main flow channel 25 in an area closer to the wheel cylinder 24 than the inlet valve 28.

The inlet valve 28 is an electromagnetic valve which is configured to switch, when changed from de-energized to energized state for example, its mode from opening to closing of passage of brake fluid flowing through its installed position. The outlet valve 29 is an electromagnetic valve which is configured to switch, when changed from de-energized to energized state for example, its mode from closing to opening of passage of brake fluid flowing through its installed position toward the accumulator 30. The first switching valve 32 is an electromagnetic valve which is configured to switch, when changed from de-energized to energized state for example, its mode from opening to closing of passage of brake fluid flowing through its installed position. The second switching valve 33 is an electromagnetic valve which is configured to switch, when changed from de-energized to energized state for example, its mode from closing to opening of passage of brake fluid flowing through its installed position toward the pump 31.

The opening/closing state of each of the inlet valve 28, the outlet valve 29, the first switching valve 32, and the second switching valve 33 is controlled by a control device 60. The driving state of the motor 40 is also controlled by the control device 60. In other words, the energized state of each of the inlet valve 28, the outlet valve 29, the first switching valve 32, the second switching valve 33, and the motor 40 is controlled by the control device 60. Power supplied from the control device 60 to the inlet valve 28, the outlet valve 29, the first switching valve 32, the second switching valve 33, and the motor 40 is power supplied from the battery 120 to the control device 60. Note that, the number of the control device 60 may be one or more than one. In addition, the control device 60 may be attached to the substrate 51, or alternatively may be attached to a member other than the substrate 51. Further, for example, a part or all of the control device 60 may be constituted of a component such as a microcomputer and a microprocessor unit, or alternatively may be constituted of an updatable component such as firmware, or alternatively may be a program module and the like executed by commands from a CPU and the like. Note that, the control device 60 will be described in detail later.

In this embodiment, the substrate 51, the members provided to the substrate 51 (such as the inlet valve 28, the outlet valve 29, the accumulator 30, the pump 31, the first switching valve 32, the second switching valve 33, the master cylinder-side pressure sensor 34, the wheel cylinder-side pressure sensor 35, and the motor 40), and the control device 60 constitute the hydraulic pressure control unit 50. Note that, the members such as the inlet valve 28, the outlet valve 29, the accumulator 30, the pump 31, the first switching valve 32, the second switching valve 33, the master cylinder-side pressure sensor 34, the wheel cylinder-side pressure sensor 35, and the motor 40 may be provided separately to multiple substrates 51.

By controlling the inlet valve 28, the outlet valve 29, the first switching valve 32, the second switching valve 33, and the motor 40, the control device 60 controls the pressure of brake fluid of the braking device 20 that brakes the vehicle 100. Specifically, by controlling the inlet valve 28, the outlet valve 29, the first switching valve 32, the second switching valve 33, and the motor 40, the control device 60 controls the pressure of brake fluid inside the wheel cylinder 24 of the braking device 20 to control a brake force to be generated on each of the front wheel 3 and the rear wheel 4. For example, the control device 60 controls the pressure of brake fluid inside the wheel cylinder 24 as follows. Note that, the control on the pressure of brake fluid inside the wheel cylinder 24 shown below is executed by an operation mode to be described later.

For example, in a normal state, the control device 60 sets the inlet valve 28 to open, sets the outlet valve 29 to be closed, sets the first switching valve 32 to open, sets the second switching valve 33 to be closed, and stops the motor 40. When the brake lever 11 is manipulated in this state, a piston (not illustrated in the drawing) of the master cylinder 21 is pressed by the brake lever 11, and the amount of brake fluid corresponding to the amount of manipulation of the brake lever 11 is ejected from the master cylinder 21. Then, the brake fluid ejected from the master cylinder 21 passes through the first switching valve 32 and the inlet valve 28 and flows into the wheel cylinder 24, which increases the pressure of brake fluid in the wheel cylinder 24. Thereby, the brake pad (not illustrated in the drawing) of the brake caliper 23 is pressed against the rotor 3a of the front wheel 3, and thus a brake force corresponding to the amount of manipulation of the brake lever 11 is generated in the front wheel 3. Note that, by causing the control device 60 to perform the same control in the second hydraulic circuit 14, a brake force corresponding to the amount of manipulation of the brake pedal 13 is generated in the rear wheel 4.

Meanwhile, when the pressure of brake fluid inside the wheel cylinder 24 is excessive or likely to be excessive, for example, the control device 60 executes an automatic pressure reducing control of discharging brake fluid from the wheel cylinder 24 to reduce the pressure of brake fluid inside the wheel cylinder 24. In the automatic pressure reducing control, the control device 60 sets the inlet valve 28 to be closed, sets the outlet valve 29 to open, sets the first switching valve 32 to open, and sets the second switching valve 33 to be closed. Then, the control device 60 drives the motor 40. This causes the brake fluid inside the wheel cylinder 24 to flow into the sub-flow channel 26 through the midstream part 25b by a suction force of the pump 31 driven by the motor 40. The brake fluid having flowed into the sub-flow channel 26 then passes through the outlet valve 29 to be stored in the accumulator 30. Accordingly, in the first hydraulic circuit 12, a pressing force against the rotor 3a of the brake pad (not illustrated in the drawing) of the brake caliper 23 is reduced, thus causing a brake force smaller than a brake force corresponding to the amount of manipulation of the brake lever 11 to be generated in the front wheel 3. Meanwhile, by causing the control device 60 to execute the same control in the second hydraulic circuit 14, a brake force smaller than a brake force corresponding to the amount of manipulation of the brake pedal 13 is generated in the rear wheel 4.

On the other hand, when the pressure of brake fluid inside the wheel cylinder 24 is deficient or likely to be deficient, for example, the control device 60 executes an automatic pressure amplifying control of supplying brake fluid to the wheel cylinder 24 to increase the pressure of brake fluid inside the wheel cylinder 24. In the automatic pressure amplifying control, the control device 60 sets the inlet valve 28 to open, sets the outlet valve 29 to be closed, sets the first switching valve 32 to be closed, and sets the second switching valve 33 to open. Then, the control device 60 drives the motor 40. This causes the brake fluid inside the master cylinder 21 to flow into the feed flow channel 27 by a suction force of the pump 31 driven by the motor 40. In addition, the brake fluid having flowed into the feed flow channel 27 passes through the second switching valve 33 and the pump 31 to flow into the midstream part 25a of the main flow channel 25 through the end part 27b. Then, the brake fluid having flowed into the main flow channel 25 through the midstream part 25a passes through the inlet valve 28 and flows into the wheel cylinder 24, which increases the pressure of brake fluid inside the wheel cylinder 24. Accordingly, in the first hydraulic circuit 12, a pressing force against the rotor 3a of the brake pad (not illustrated in the drawing) of the brake caliper 23 is increased, thus causing a brake force larger than a brake force corresponding to the amount of manipulation of the brake lever 11 to be generated in the front wheel 3. Meanwhile, by causing the control device 60 to execute the same control in the second hydraulic circuit 14, a brake force larger than a brake force corresponding to the amount of manipulation of the brake pedal 13 is generated in the rear wheel 4.

### <Configuration and Operation of Hydraulic Pressure Control Unit>

The hydraulic pressure control unit according to this embodiment will be described in detail.

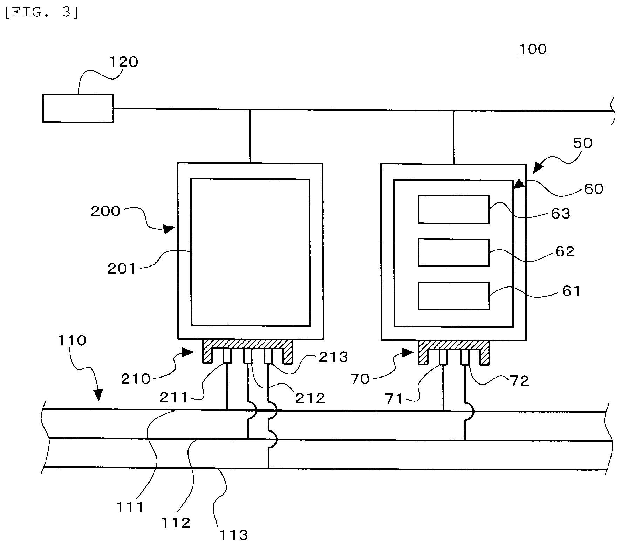

Fig. 3 is a diagram illustrating the hydraulic pressure control unit according to the embodiment of the present invention.

The hydraulic pressure control unit 50 is driven by power supplied by the battery 120 mounted to the vehicle 100. Thus, when mounted to the vehicle 100, the hydraulic pressure control unit 50 is connected to the battery 120 via a power supply line. In addition, when mounted to the vehicle 100, the hydraulic pressure control unit 50 is connected to an in-vehicle network 110 equipped in the vehicle 100. The control device 60 of the hydraulic pressure control unit 50 controls the inlet valve 28, the outlet valve 29, the first switching valve 32, the second switching valve 33, and the motor 40 using control signals, which are input via the in-vehicle network 110, to control the pressure of brake fluid inside the wheel cylinder 24 of the braking device 20. Examples of the control signals which are input to the hydraulic pressure control unit 50 via the in-vehicle network 110 include the wheel speed of each of the wheels (the front wheel 3 and the rear wheel 4) and an engine speed.

Thus, the hydraulic pressure control unit 50 includes a connector 70 that is connected to the in-vehicle network 110. In addition, the connector 70 includes terminals that accept input of control signals used for the control on the pressure of brake fluid inside the wheel cylinder 24. Here, although the kind of the in-vehicle network 110 is not particularly limited, the in-vehicle network 110 in this embodiment is made up of CAN bus. The in-vehicle network 110 therefore includes: a signal line 111 that is a CANH signal line; and a signal line 112 that is a CANL signal line. The in-vehicle network 110 has such a configuration as to send control signals to the hydraulic pressure control unit 50 using the signal line 111 and the signal line 112. For this reason, as the terminals that accept input of control signals used for the control on the pressure of brake fluid inside the wheel cylinder 24, the connector 70 includes: a terminal 71 that is connected to the signal line 111; and a terminal 72 that is connected to the signal line 112.

At least one control unit other than the hydraulic pressure control unit 50 is also connected to the in-vehicle network 110. Examples of such a different control unit include an engine control unit. Note that, a control device equipped in the different control unit is hereinafter referred to as a different control device. Fig. 3 illustrates a control unit 200 as the different control unit. In addition, Fig. 3 illustrates a control device 201 as the different control device. As in the case of the hydraulic pressure control unit 50, the control unit 200 also includes a connector 210 that is connected to the in-vehicle network 110. In addition, the connector 210 includes: a terminal 211 that is connected to the signal line 111; and a terminal 212 that is connected to the signal line 112. The control device 201 of the control unit 200 controls an object to be controlled using control signals sent using the signal line 111 and the signal line 112. Thus, control signals for the control device 201 (an example of the different control device) are also input to the terminal 71 and the terminal 72 of the connector 70 of the hydraulic pressure control unit 50.

Here, as described previously, the control deice 60 of the hydraulic pressure control unit 50 executes the control on the pressure of brake fluid inside the wheel cylinder 24 in the operation mode. Thus, as a functional part, the control device 60 includes an operation mode execution part 62 that is a controller configured to execute the operation mode. To put it differently, the operation mode execution part 62 controls the inlet valve 28, the outlet valve 29, the first switching valve 32, the second switching valve 33, and the motor 40 as described above to control the pressure of brake fluid inside the wheel cylinder 24.

The operation of the hydraulic pressure control unit 50 in this operation mode consumes a large amount of power. Accordingly, if the hydraulic pressure control unit 50 is constantly kept in the operation mode, it consumes power of the battery 120 excessively, which may cause the battery to run out. Meanwhile, the hydraulic pressure control unit 50 needs to be constantly supplied with power from the viewpoint of protection of data in a volatile memory, for example. For this reason, when the vehicle 100 is in a state of not being ready for travel or when the vehicle 100 is in a state of not being preparing for travel, the hydraulic pressure control unit 50 stands by in a sleep mode in which power consumption is suppressed as compared to that in the operation mode. The state in which the vehicle 100 is not ready for travel or the state in which the vehicle 100 is not preparing for travel indicates a state in which an ignition switch is turned off, for example. In addition, the state in which the vehicle 100 is not ready for travel or the state in which the vehicle 100 is not preparing for travel indicates a state in which a main switch for turning the units connected to the in-vehicle network 110 into the operation mode is turned off, for example. When the vehicle 100 becomes in a state of being ready for travel or when the vehicle 100 becomes in a state of being preparing for travel, the hydraulic pressure control unit 50 operates in the operation mode. The state in which the vehicle 100 is ready for travel or the state in which the vehicle 100 is preparing for travel indicates a state in which the ignition switch is turned on, for example. In addition, the state in which the vehicle 100 is ready for travel or the state in which the vehicle 100 is preparing for travel indicates a state in which the main switch for turning the units connected to the in-vehicle network 110 into the operation mode is turned on, for example.

To implement this configuration, the control device 60 includes a mode switching part 61 and a sleep mode execution part 63 as a functional part. The mode switching part 61 is a functional part that is configured to switch the mode between the operation mode and the sleep mode. The sleep mode execution part 63 is a controller that is configured to execute the sleep mode being a mode in which power consumption is suppressed as compared to that in the operation mode. In this embodiment, in the sleep mode, the sleep mode execution part 63 monitors input of signals to the terminal 71 and the terminal 72 of the connector 70. In addition, in the sleep mode, out of the configurations of the hydraulic pressure control unit 50, the sleep mode execution part 63 supplies power to a configuration that needs to be constantly supplied with power. Further, in the sleep mode, the sleep mode execution part 63 does not energize the inlet valve 28, the outlet valve 29, the first switching valve 32, the second switching valve 33, and the motor 40 in order to suppress power consumption as compared to that during the operation mode.

Meanwhile, an existing hydraulic pressure control unit also stands by in a sleep mode when the vehicle is in a state of not being ready for travel or when the vehicle is in a state of not being preparing for travel, and operates in an operation mode when the vehicle is in a state of being ready for travel or when the vehicle is in a state of being preparing for travel. In this event, the existing hydraulic pressure control unit has such a configuration as to switch its mode between the operation mode and the sleep mode with a wakeup signal as a trigger. Specifically, the existing hydraulic pressure control unit includes a wakeup terminal that is a terminal dedicated to receiving a wakeup signal at a connector thereof. The existing hydraulic pressure control unit has such a configuration as to switch its mode to the operation mode once a wakeup signal is input to the wakeup terminal in a state where this control unit stands by in the sleep mode. For example, as in the case of the existing hydraulic pressure control unit, the control unit 200 illustrated in Fig. 3 also has such a configuration as to switch its mode between the operation mode and the sleep mode with a wakeup signal as a trigger. To this end, the connector 210 of the control unit 200 includes a wakeup terminal 213. This wakeup terminal 213 is connected to a wakeup signal line 113. Then, once a wakeup signal is input to the wakeup terminal 213 through the wakeup signal line 113, the control unit 200 switches its mode from the sleep mode to the operation mode.

Here, a straddle-type vehicle being one type of a vehicle has low flexibility in the layout of components and low flexibility in the mounting of a hydraulic pressure control unit as compared to vehicles such as a four-wheeled motor vehicle. For this reason, there has heretofore been a demand for reduction in size of a hydraulic pressure control unit to be mounted to straddle-type vehicles. In addition, in recent years, there also has been a demand for reduction in size of a hydraulic pressure control unit for vehicles such as a four-wheeled motor vehicle due to reasons such as reduction in size of an engine room and increase in the number of components mounted in the engine room. In this regard, in the existing hydraulic pressure control unit, the wakeup terminal constitutes one of factors of hampering reduction in size of a hydraulic pressure control unit. For this reason, the existing hydraulic pressure control unit is difficult to reduce in size.

Against this background, the mode switching part 61 of the hydraulic pressure control unit 50 according to this embodiment has such a configuration as to switch the mode from the sleep mode to the operation mode once a signal is input to at least one of the terminal 71 and the terminal 72 during the sleep mode. In other words, the hydraulic pressure control unit 50 according to this embodiment needs no wakeup terminal. Further, the terminal 71 and the terminal 72 are the configuration also essential for the existing hydraulic pressure control unit and are provided also to a connector of the existing hydraulic pressure control unit. Accordingly, the hydraulic pressure control unit 50 according to this embodiment does not need to provide any new terminal instead of the wakeup terminal. Thus, the hydraulic pressure control unit 50 according to this embodiment can be made smaller in size than the existing hydraulic pressure control unit because the connector 70 can be made smaller in size than that in the existing hydraulic pressure control unit.

Here, the signal that is input to at least one of the terminal 71 and the terminal 72 during the sleep mode and serves as a trigger for switching the mode from the sleep mode to the operation mode is not particularly limited, but is preferably a signal as follows.

For example, the signal that is input to at least one of the terminal 71 and the terminal 72 during the sleep mode and serves as a trigger for switching the mode from the sleep mode to the operation mode is preferably a signal of a prescribed pattern. For example, when the vehicle 100 becomes in a state of being ready for travel or when the vehicle 100 becomes in a state of being preparing for travel, the different control unit such as the control unit 200 outputs a signal of a prescribed pattern previously determined to the in-vehicle network 110. Then, the mode switching part 61 of the hydraulic pressure control unit 50 switches the mode from the sleep mode to the operation mode once the signal of a prescribed pattern is input to at least one of the terminal 71 and the terminal 72 in a state where the hydraulic pressure control unit 50 is in the sleep mode. Meanwhile, some of the different control units such as the control unit 200 start an operation check once a signal of a prescribed pattern is input from the in-vehicle network 110 when the vehicle 100 becomes in a state of being ready for travel or when the vehicle 100 becomes in a state of being preparing for travel. This signal of a prescribed pattern is input to at least one of the terminal 71 and the terminal 72 in a state where the hydraulic pressure control unit 50 is in the sleep mode. In response to this event, the mode switching part 61 of the hydraulic pressure control unit 50 may switch the mode from the sleep mode to the operation mode. By employing a signal of a prescribed pattern as the signal that serves as a trigger for switching the mode from the sleep mode to the operation mode, even when noise is input to at least one of the terminal 71 and the terminal 72, it is possible to inhibit the mode switching part 61 from switching the mode from the sleep mode to the operation mode.

Alternatively, for example, the signal that is input to at least one of the terminal 71 and the terminal 72 during the sleep mode and serves as a trigger for switching the mode from the sleep mode to the operation mode is preferably a control signal used for the control on the pressure of brake fluid inside the wheel cylinder 24. When the vehicle 100 becomes in a state of being ready for travel or when the vehicle 100 becomes in a state of being preparing for travel, the different control unit or the like outputs, to the in-vehicle network 110, the control signal used for the control on the pressure of brake fluid inside the wheel cylinder 24. For example, the mode switching part 61 of the hydraulic pressure control unit 50 may switch the mode from the sleep mode to the operation mode once this control signal is input to at least one of the terminal 71 and the terminal 72. By employing the control signal as the signal that serves as a trigger for switching the mode from the sleep mode to the operation mode, even when noise is input to at least one of the terminal 71 and the terminal 72, it is possible to inhibit the mode switching part 61 from switching the mode from the sleep mode to the operation mode. In addition, by employing the control signal as the signal that serves as a trigger for switching the mode from the sleep mode to the operation mode, it is no longer necessary to previously decide to cause the different control unit to output the signal serving as a trigger. Thus, to employ the control signal as the signal that serves as a trigger for switching the mode from the sleep mode to the operation mode facilitates construction of the vehicle 100's system and the like.

Still alternatively, for example, the signal that is input to at least one of the terminal 71 and the terminal 72 during the sleep mode and serves as a trigger for switching the mode from the sleep mode to the operation mode is preferably a control signal for the different control device such as the control device 201. When the vehicle 100 becomes in a state of being ready for travel or when the vehicle 100 becomes in a state of being preparing for travel, the control signal for the different control device such as the control device 201 is also output to the in-vehicle network 110. For example, the mode switching part 61 of the hydraulic pressure control unit 50 may switch the mode from the sleep mode to the operation mode once this control signal is input to at least one of the terminal 71 and the terminal 72. By employing the control signal as the signal that serves as a trigger for switching the mode from the sleep mode to the operation mode, even when noise is input to at least one of the terminal 71 and the terminal 72, it is possible to inhibit the mode switching part 61 from switching the mode from the sleep mode to the operation mode. In addition, by employing the control signal as the signal that serves as a trigger for switching the mode from the sleep mode to the operation mode, it is no longer necessary to previously decide to cause the different control unit to output the signal serving as a trigger. Thus, to employ the control signal as the signal that serves as a trigger for switching the mode from the sleep mode to the operation mode facilitates construction of the vehicle 100's system and the like.

Still alternatively, for example, the signal that is input to at least one of the terminal 71 and the terminal 72 during the sleep mode and serves as a trigger for switching the mode from the sleep mode to the operation mode is preferably a signal having multiple pulses. By employing the signal having multiple pulses as the signal that serves as a trigger for switching the mode from the sleep mode to the operation mode, even when noise is input to at least one of the terminal 71 and the terminal 72, it is possible to inhibit the mode switching part 61 from switching the mode from the sleep mode to the operation mode.

Meanwhile, the mode switching part 61's configuration of switching the mode from the operation mode to the sleep mode is not particularly limited, but the mode switching part 61 preferably has a configuration of switching the mode from the operation mode to the sleep mode if the following condition is satisfied, for example.

For example, the mode switching part 61 preferably has a configuration of switching the mode from the operation mode to the sleep mode if the control signal used for the control on the pressure of brake fluid inside the wheel cylinder 24 is not input for a prescribed period of time during the operation mode. When the vehicle is in a state of not being ready for travel or when the vehicle is in a state of not being preparing for travel, the different control unit or the like does not output, to the in-vehicle network 110, the control signal used for the control on the pressure of brake fluid inside the wheel cylinder 24. Accordingly, by employing such a configuration as the mode switching part 61's configuration of switching the mode from the operation mode to the sleep mode, it is possible to inhibit the mode switching part 61 from switching the mode from the operation mode to the sleep mode due to an erroneous operation.

Alternatively, for example, the mode switching part 61 preferably has a configuration of switching the mode from the operation mode to the sleep mode if a signal of a prescribed pattern is input during the operation mode. This signal of a prescribed pattern is output to the in-vehicle network 110 from the different control unit such as the control unit 200 when the vehicle 100 becomes in a state of not being ready for travel or when the vehicle 100 becomes in a state of not being preparing for travel. By employing such a configuration as the mode switching part 61's configuration of switching the mode from the operation mode to the sleep mode, it is possible to inhibit the mode switching part 61 from switching the mode from the operation mode to the sleep mode due to an erroneous operation. Note that, this prescribed pattern serving as a trigger for switching the mode from the operation mode to the sleep mode may be the same as the prescribed pattern serving as a trigger for switching the mode from the sleep mode to the operation mode, or may be different from the prescribed pattern serving as a trigger for switching the mode from the sleep mode to the operation mode.

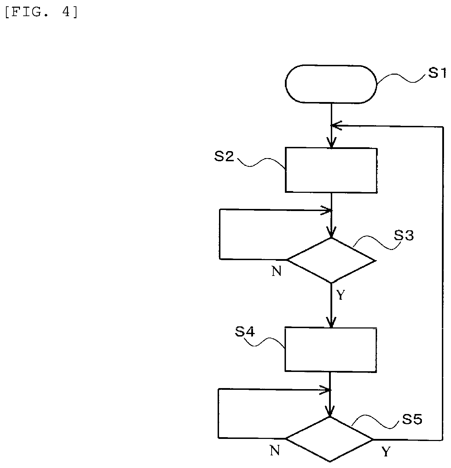

Fig. 4 is a control flow diagram used when the mode switching part of the control device according to the embodiment of the present invention switches the mode between the sleep mode and the operation mode.

For example, in Step S1, the mode switching part 61 starts a control flow illustrated in Fig. 4 upon supply of power to the hydraulic pressure control unit 50. Note that, the control flow illustrated in Fig. 4 is executed while power is supplied to the hydraulic pressure control unit 50.

Step S2 is a sleep mode execution instruction step. In Step S2, the mode switching part 61 instructs the sleep mode execution part 63, which is the controller configured to execute the sleep mode, to execute the sleep mode. Step S3 after Step S2 is a mode switching judgment step. In Step S3, the mode switching part 61 continues Step S3 until any of the above signals serving as a trigger for switching the mode from the sleep mode to the operation mode is input to at least one of the terminal 71 and the terminal 72. On the other hand, in Step S3, the mode switching part 61 moves the process to Step S4 if any of the above signals serving as a trigger for switching the mode from the sleep mode to the operation mode is input to at least one of the terminal 71 and the terminal 72.

Step S4 is an operation mode execution instruction step. In Step S4, the mode switching part 61 instructs the operation mode execution part 62, which is the controller configured to execute the operation mode, to execute the operation mode. Step S5 after Step S4 is a mode switching judgment step. In Step S5, the mode switching part 61 continues Step S5 until any of the above conditions for switching the mode from the operation mode to the sleep mode is satisfied. On the other hand, in Step S5, the mode switching part 61 moves the process to Step S2 if any of the above conditions for switching the mode from the operation mode to the sleep mode is satisfied.

### <Effect of Hydraulic Pressure Control Unit>

The hydraulic pressure control unit 50 according to this embodiment is a hydraulic pressure control unit that controls the pressure of brake fluid of the braking device 20 configured to brake the vehicle 100. The hydraulic pressure control unit 50 includes: the control device 60 that is configured to control the pressure of brake fluid of the braking device 20; and the connector 70 that is connected to the in-vehicle network 110. In addition, the control device 60 includes the mode switching part 61 that is configured to switch the mode between the operation mode and the sleep mode. The operation mode is a mode in which the control on the pressure of brake fluid of the braking device 20 is executed. The sleep mode is a mode in which power consumption is suppressed as compared to that in the operation mode. In addition, the connector 70 includes the terminals that accept input of control signals used for the control on the pressure of brake fluid of the braking device 20. The mode switching part 61 has such a configuration as to switch the mode from the sleep mode to the operation mode once a signal is input to the terminals during the sleep mode.

As described above, the connector 70 of the hydraulic pressure control unit 50 having such a configuration needs no wakeup terminal that is provided to the connector of the existing hydraulic pressure control unit. Thus, the hydraulic pressure control unit 50 having such a configuration can make the connector 70 smaller in size than that of the existing hydraulic pressure control unit, whereby the hydraulic pressure control unit 50 can be made smaller in size than the existing hydraulic pressure control unit.

It is preferable that the vehicle 100 equipped with the hydraulic pressure control unit 50 is a straddle-type vehicle. A straddle-type vehicle has low flexibility in the layout of components and low flexibility in the mounting of a hydraulic pressure control unit as compared to vehicles such as a four-wheeled motor vehicle. For this reason, heretofore, reduction in size of a hydraulic pressure control unit mounted to a straddle-type vehicle has been further requested as compared to a hydraulic pressure control unit mounted to vehicles such as a four-wheeled motor vehicle. Accordingly, it is preferable to mount, in a straddle-type vehicle, the hydraulic pressure control unit 50 which makes it possible to reduce its size as compared to the existing hydraulic pressure control unit.

Hereinabove, the hydraulic pressure control unit 50 according to this embodiment has been described; however, the hydraulic pressure control unit according to the present invention is not limited to that described in this embodiment, and this embodiment may be implemented partially.

### Reference Signs List

1: Trunk
2: Handlebar
3: Front wheel
3a: Rotor
4: Rear wheel
4a: Rotor
10: Brake system
11: Brake lever
12: First hydraulic circuit
13: Brake pedal
14: Second hydraulic circuit
20: Braking device
21: Master cylinder
22: Reservoir
23: Brake caliper
24: Wheel cylinder
25: Main flow channel
25a: Midstream part
25b: Midstream part
26: Sub-flow channel
26a: End part
26b: End part
27: Feed flow channel
27a: End part
27b: End part
27c: Midstream part
28: Inlet valve
29: Outlet valve
30: Accumulator
31: Pump
32: First switching valve
33: Second switching valve
34: Master cylinder-side pressure sensor
35: Wheel cylinder-side pressure sensor
40: Motor
50: Hydraulic pressure control unit
51: Substrate
60: Control device
61: Mode switching part
62: Operation mode execution part
63: Sleep mode execution part
70: Connector
71: Terminal
72: Terminal
100: Vehicle
110: In-vehicle network
111: Signal line
112: Signal line
113: Wakeup signal line
120: Battery
200: Control unit
201: Control device
210: Connector
211: Terminal
212: Terminal
213: Wakeup terminal
MP: Master cylinder port
WP: Wheel cylinder port

## Claims

1. A hydraulic pressure control unit (50) that controls a pressure of brake fluid of a braking device (20) configured to brake a vehicle (100), comprising:
a control device (60) that is configured to control the pressure; and
a connector (70) that is connected to an in-vehicle network (110), **characterized in that**
the control device (60) includes a mode switching part (61) that is configured to switch a mode between an operation mode and a sleep mode,
the operation mode is a mode in which control on the pressure is executed,
the sleep mode is a mode in which power consumption is suppressed as compared to that in the operation mode,
the connector (70) includes a terminal (71, 72) that accepts input of a control signal used for the control on the pressure, and
the mode switching part (61) has such a configuration as to switch the mode from the sleep mode to the operation mode once a signal is input to the terminal (71, 72) during the sleep mode.

2. The hydraulic pressure control unit (50) according to claim 1, wherein the signal to be input to the terminal (71, 72) during the sleep mode is a signal of a prescribed pattern.

3. The hydraulic pressure control unit (50) according to claim 1, wherein the signal to be input to the terminal (71, 72) during the sleep mode is the control signal.

4. The hydraulic pressure control unit (50) according to claim 1, wherein the signal to be input to the terminal (71, 72) during the sleep mode is a control signal for a different control device (201).

5. The hydraulic pressure control unit (50) according to any one of claims 2 to 4, wherein the signal to be input to the terminal (71, 72) during the sleep mode is a signal having a plurality of pulses.

6. The hydraulic pressure control unit (50) according to any one of claims 1 to 5, wherein the mode switching part (61) has such a configuration as to switch the mode from the operation mode to the sleep mode if the control signal used for the control on the pressure is not input for a prescribed period of time during the operation mode.

7. The hydraulic pressure control unit (50) according to any one of claims 1 to 6, wherein the mode switching part (61) has such a configuration as to switch the mode from the operation mode to the sleep mode if a signal of a prescribed pattern is input during the operation mode.

8. A vehicle (100) comprising the hydraulic pressure control unit (50) according to any one of claims 1 to 7.

9. The vehicle (100) according to claim 8, wherein the vehicle (100) is a straddle-type vehicle.

## Patentansprüche

1. Hydraulikdrucksteuerung (50), die einen Bremsflüssigkeitsdruck einer Bremsvorrichtung (20), die zum Bremsen eines Fahrzeugs (100) ausgestaltet ist, steuert, umfassend:
eine Steuervorrichtung (60), die dazu ausgestaltet ist, den Druck zu steuern; und
ein Verbindungselement (70), das mit einem fahrzeuginternen Netzwerk (110) verbunden ist, **dadurch gekennzeichnet, dass**
die Steuervorrichtung (60) ein Modusumschaltteil (61) umfasst, das dazu ausgestaltet ist, einen Modus zwischen einem Betriebsmodus und einem Ruhemodus umzuschalten,
der Betriebsmodus ein Modus ist, in dem eine Steuerung des Drucks ausgeführt wird,
der Ruhemodus ein Modus ist, in dem die Leistungsaufnahme - verglichen mit derjenigen im Betriebsmodus - herabgesetzt ist,
das Verbindungselement (70) ein Endgerät (71, 72) umfasst, das die Eingabe eines Steuersignals, das zur Steuerung des Drucks verwendet wird, zulässt, und
das Modusumschaltteil (61) eine Ausgestaltung derart aufweist, dass es den Modus von dem Ruhemodus in den Betriebsmodus umschaltet, wenn während des Ruhemodus ein Signal in das Endgerät (71, 72) eingegeben wird.

2. Hydraulikdrucksteuerung (50) nach Anspruch 1, wobei das Signal, das während des Ruhemodus in das Endgerät (71, 72) einzugeben ist, ein Signal mit einem vorgegebenen Muster ist.

3. Hydraulikdrucksteuerung (50) nach Anspruch 1, wobei das Signal, das während des Ruhemodus in das Endgerät (71, 72) einzugeben ist, das Steuersignal ist.

4. Hydraulikdrucksteuerung (50) nach Anspruch 1, wobei das Signal, das während des Ruhemodus in das Endgerät (71, 72) einzugeben ist, ein Steuersignal für eine andere Steuervorrichtung (201) ist.

5. Hydraulikdrucksteuerung (50) nach einem der Ansprüche 2 bis 4, wobei das Signal, das während des Ruhemodus in das Endgerät (71, 72) einzugeben ist, ein Signal mit einer Mehrzahl von Impulsen ist.

6. Hydraulikdrucksteuerung (50) nach einem der Ansprüche 1 bis 5, wobei das Modusumschaltteil (61) eine Ausgestaltung derart aufweist, dass es den Modus von dem Betriebsmodus in den Ruhemodus umschaltet, wenn während des Betriebsmodus das Steuersignal, das zur Steuerung des Drucks verwendet wird, für einen vorgegebenen Zeitraum nicht eingegeben wird.

7. Hydraulikdrucksteuerung (50) nach einem der Ansprüche 1 bis 6, wobei das Modusumschaltteil (61) eine Ausgestaltung derart aufweist, dass es den Modus von dem Betriebsmodus in den Ruhemodus umschaltet, wenn während des Betriebsmodus ein Signal mit einem vorgegebenen Muster eingegeben wird.

8. Fahrzeug (100), umfassend die Hydraulikdrucksteuerung (50) nach einem der Ansprüche 1 bis 7.

9. Fahrzeug (100) nach Anspruch 8, wobei das Fahrzeug (100) ein Spreizsitzfahrzeug ist.

## Revendications

1. Unité de commande de pression hydraulique (50) qui commande une pression de liquide de frein d'un dispositif de freinage (20) configuré pour freiner un véhicule (100), comprenant :
un dispositif de commande (60) configuré pour commander la pression ; et
un connecteur (70) connecté à un réseau embarqué (110), **caractérisée en ce que**
le dispositif de commande (60) comporte une partie de commutation de mode (61) configurée pour commuter un mode entre un mode de fonctionnement et un mode veille,
le mode de fonctionnement est un mode dans lequel la commande de la pression est exécutée,
le mode veille est un mode dans lequel la consommation d'énergie est réprimée par rapport à celle du mode de fonctionnement,
le connecteur (70) comporte une borne (71, 72) qui accepte en entrée un signal de commande utilisé pour la commande de la pression, et
la partie de commutation de mode (61) présente une configuration telle qu'elle commute le mode du mode veille vers le mode de fonctionnement dès qu'un signal est appliqué en entrée à la borne (71, 72) durant le mode veille.

2. Unité de commande de pression hydraulique (50) selon la revendication 1, dans laquelle le signal devant être appliqué en entrée à la borne (71, 72) durant le mode veille est un signal d'un motif prescrit.

3. Unité de commande de pression hydraulique (50) selon la revendication 1, dans laquelle le signal devant être appliqué en entrée à la borne (71, 72) durant le mode veille est le signal de commande.

4. Unité de commande de pression hydraulique (50) selon la revendication 1, dans laquelle le signal devant être appliqué en entrée à la borne (71, 72) durant le mode veille est un signal de commande pour un dispositif de commande (201) différent.

5. Unité de commande de pression hydraulique (50) selon l'une quelconque des revendications 2 à 4, dans laquelle le signal devant être appliqué en entrée à la borne (71, 72) durant le mode veille est un signal possédant une pluralité d'impulsions.

6. Unité de commande de pression hydraulique (50) selon l'une quelconque des revendications 1 à 5, dans laquelle la partie de commutation de mode (61) présente une configuration telle qu'elle commute le mode du mode de fonctionnement vers le mode veille si le signal de commande utilisé pour la commande de la pression n'est pas appliqué en entrée pendant une durée prescrite durant le mode de fonctionnement.

7. Unité de commande de pression hydraulique (50) selon l'une quelconque des revendications 1 à 6, dans laquelle la partie de commutation de mode (61) présente une configuration telle qu'elle commute le mode du mode de fonctionnement vers le mode veille si un signal d'un motif prescrit est appliqué en entrée durant le mode de fonctionnement.

8. Véhicule (100) comprenant l'unité de commande de pression hydraulique (50) selon l'une quelconque des revendications 1 à 7.

9. Véhicule (100) selon la revendication 8, le véhicule (100) étant un véhicule de type à enfourcher.
